# EUROPEAN PATENT APPLICATION

(11) **EP 4 063 995 A1**
(43) Date of publication of application: **28.09.2022**
(21) Application number: 20893635.1
(22) Date of filing: 05.11.2020
(51) Int. Cl.: G06F 1/16

(54) **METHOD AND APPARATUS FOR CONTROLLING WEARABLE DEVICE, AND ELECTRONIC DEVICE**

(30) Priority: 25.11.2019 CN 201911166448
(71) Applicant: GUANGDONG OPPO MOBILE TELECOMMUNICATIONS CORP., LTD., Dongguan, Guangdong 523860 (CN)
(72) Inventor: LIU, Enfu, Dongguan, Guangdong 523860 (CN)
(74) Representative: Manitz Finsterwald Patent- und Rechtsanwaltspartnerschaft mbB
(86) International application number: PCT/CN2020/126632
(87) International publication number: WO 2021/103971

(57) **Abstract**

A method for controlling a wearable device. A first system has a higher power consumption than a second system. The method comprises: obtaining a scheduled start time; after the start time is reached, obtaining user behavior data; and when the user behavior data satisfies a preset system switching condition, switching the system running on the wearable device to the second system.

## Description

### CROSS-REFERENCE TO RELATED APPLICATIONS

The present application claims priority of a Chinese patent application submitted to State Intellectual Property Office of China on November 25, 2019, with an application No. 201911166448.X and a title of "METHOD AND APPARATUS FOR CONTROLLING WEARABLE DEVICE, AND ELECTRONIC DEVICE"; the entire content thereof is incorporated herein by reference.

### TECHNICAL FIELD

The present application relates to the field of computer technology, and in particular, to a method and apparatus for controlling a wearable device, an electronic device, and a computer-readable storage medium.

### BACKGROUND

Smart wearable devices are becoming more and more popular, especially smart watches and wristbands have been loved by more and more young people. Smart wearable devices have not only functions of traditional watches, such as clocks, but also some functions of other electronic devices, such as mobile phones, which lead to large power consumption of smart wearable devices currently on the market.

### SUMMARY OF THE DISCLOSURE

According to various embodiments of the present application, a method and apparatus for controlling a wearable device, an electronic device, and a computer-readable storage medium are provided.

In a method for controlling a wearable device, the wearable device includes a first system and a second system, wherein power consumption of the first system is higher than that of the second system, and the method includes: acquiring start time of a schedule; in response to reaching the start time, acquiring user behavior data; and in response to the user behavior data meeting a preset system switching condition, switching a system running on the wearable device to the second system.

In an apparatus for controlling a wearable device, the wearable device includes a first system and a second system, wherein power consumption of the first system is higher than that of the second system, and the apparatus includes: a first acquiring module configured to acquire start time of a schedule; a second acquiring module configured to acquire user behavior data in response to reaching the start time; and a system switching module configured to switching a system running on the wearable device to the second system in response to the user behavior data meeting a preset system switching condition.

An electronic device includes a memory and a processor, the memory stores a computer program, and the computer program, when being executed by the processor, makes the processor execute the following operations: acquiring start time of a schedule; in response to reaching the start time, acquiring user behavior data; and in response to the user behavior data meeting a preset system switching condition, switching a system running on the wearable device to the second system.

A computer-readable storage medium stores a computer program, and the computer program, when being executed by a processor, implements the following operations: acquiring start time of a schedule; in response to reaching the start time, acquiring user behavior data; and in response to the user behavior data meeting a preset system switching condition, switching a system running on the wearable device to the second system.

In the above method and apparatus for controlling a wearable device, electronic device, and computer-readable storage medium, the start time of a schedule is acquired, and when the start time is reached, the user behavior data is acquired; the user behavior data is acquired only when the start time is reached, it is not required to keep acquiring the user behavior data, thereby saving power consumption; when the user behavior data meets the preset system switching condition, a system running on the wearable device is switched to the second system, wherein power consumption of the first system is higher than that of the second system, and power consumption of the wearable device can be further lowered.

### BRIEF DESCRIPTION OF THE DRAWINGS

In order to describe technical solutions in embodiments of the present application or in the prior art more clearly, drawings required being used in description of the embodiments or of the prior art will be simply introduced below. Obviously, the drawings in the following description are merely some embodiments of the present application. For one of ordinary skill in the art, it is also possible to acquire other drawings according to these drawings without paying any creative work.
FIG. 1 is an internal structural schematic diagram of a wearable device in one embodiment.
FIG. 2 is a flow chart of a method for controlling a wearable device in one embodiment.
FIG. 3 is a schematic diagram of a function control system of a wearable device in one embodiment.
FIG. 4 is a schematic flow chart of component configuration in one embodiment.
FIG. 5 is a schematic diagram of a componentized configured system in one embodiment.
FIG. 6 is a schematic diagram of componentized configured modules in one embodiment.
FIG. 7 is a structural block diagram of an apparatus for controlling a wearable device in one embodiment.
FIG. 8 is an internal structural schematic diagram of an electronic device in one embodiment.

### DETAILED DESCRIPTION

In order to make purposes, technical solutions, and advantages of the present application be clearer and more explicit, the present application will be further described in detail below with reference to the accompanying drawings and embodiment. It should be understood that the specific embodiments described herein are only intended to illustrate the present application, but not to limit the present application.

It can be understood that the terms "first", "second" and the like used in the present application may be used herein to describe various elements, but these elements are not limited by these terms. These terms are only used to distinguish a first element from another element. For example, a first system could be termed a second system without departing from the scope of the present application, and similarly, a second system could be termed a first system. Both the first system and the second system are clients, but they are not the same system.

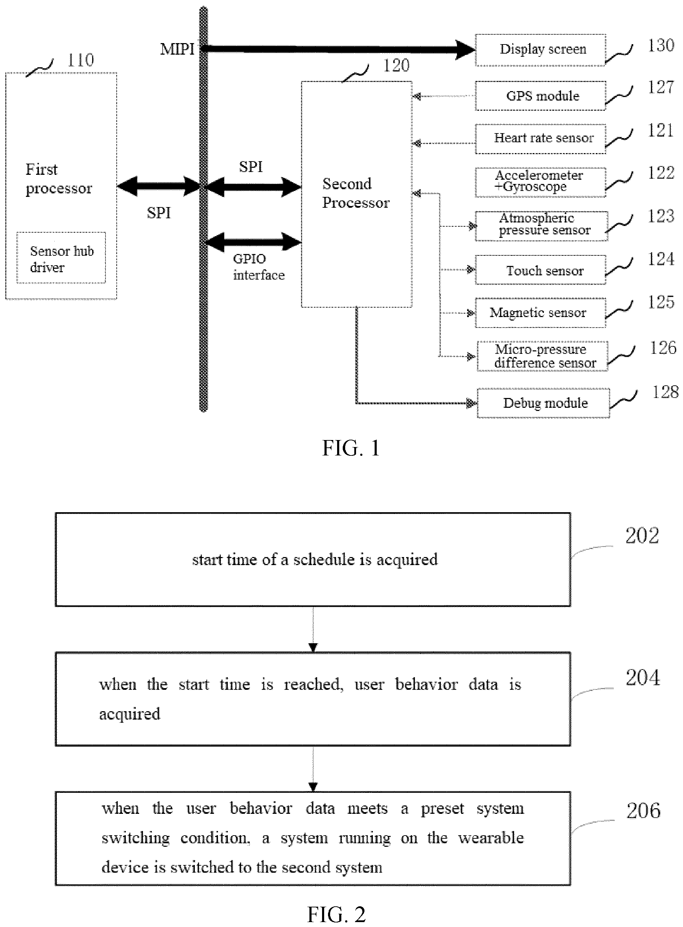

FIG. 1 is an internal structural schematic diagram of a wearable device in one embodiment. As shown in FIG. 1, in one embodiment, a provided wearable device includes a first processor 110 corresponding to a first system and a second processor 120 corresponding to a second system. Both the first system 110 and the second system 120 are microprocessors, wherein the first processor 110 is a core processor. The first processor 110 and the second processor 120 can be configured with corresponding microprocessors according to actual applications, and the first processor 110 and the second processor 120 are not limited here. The systems can be Android systems, Linux systems, Windows systems, IOS systems, RTOS (Real Time Operating Systems), and are not limited here. Power consumption of the first system is higher than that of the second system. For example, the first processor 110 can be a CPU (Central Processing Unit) processor, and the corresponding first system can be an Android system; the second processor 120 can be an MCU (Microcontroller Unit) processor, and the corresponding second system can be an RTOS. Among them, a main frequency of a CPU can reach 1.2 GHz, and a main frequency of an MCU is about 120 MHz; therefore, power consumption of the first processor is higher than that of the second processor, and power consumption of the first system is higher than that of the second system.

Specifically, the wearable device can include one or more of a heart rate sensor 121, an accelerometer + gyroscope 122, an atmospheric pressure sensor 123, a touch sensor 124, a magnetic sensor 125, a micro-pressure difference sensor 126 and other sensors; the second processor 120 can be connected with sensors included in the wearable device for acquiring data collected by the sensors; the second processor 120 can also be connected with a GPS (Global Positioning System) module 127 for acquiring positioning data received by a GPS antenna, and connected with a debug module 128 for outputting debug data of the wearable device.

The first processor 110 and the second processor 120 are connected through an SPI (Serial Peripheral Interface), so that the first system and the second system can transmit communication data through an SPI bus. A display screen 130 is connected to the first processor 110 and the second processor 120 through a MIPI (Mobile Industry Processor Interface), and can display data output by the first processor 110 or the second processor 120. The first processor 110 further includes a sensor hub driver, which can be used to drive data collection and processing of each sensor.

FIG. 2 is a flow chart of a method for controlling a wearable device in one embodiment. The method for controlling a wearable device in this embodiment takes operation in the above wearable device as an example to describe. As shown in FIG. 2, the method for controlling a wearable device includes Operation 202 to Operation 206.

Operation 202, start time of a schedule is acquired.

Among them, the schedule refers to a schedule arranged according to the date, which is saved on the wearable device. The schedule can be used to schedule travel plans for various time periods in a day. Schedules include but are not limited to: class schedules for student groups, meeting schedules for business people, sports scenarios such as marathons, sleep schedules, and other schedules.

Specifically, when a system running on the wearable device is the first system, the wearable device acquires the start time of the schedule. The start time of the schedule is start time configured on the first system.

Operation 204, when the start time is reached, user behavior data is acquired.

Among them, the user behavior data refers to data generated when a user performs behavior. For example, the user behavior data may be at least one of, but not limited to, a heart rate value, an acceleration value, and gyroscope data.

Specifically, when the start time is reached, the wearable device acquires user behavior data. For example, if a first schedule is set to be running from 17:00 to 18:00, then 17:00 is the start time of the first schedule. A second schedule is set to be eating from 18:10 to 19:00, then 18:10 is the start time of the second schedule. Then when it reaches 17:00, the wearable device starts to acquire user behavior data until it stops at 18:00. When it reaches 18:10, the wearable device starts to acquire user behavior data.

Operation 206, when the user behavior data meets a preset system switching condition, a system running on the wearable device is switched to the second system.

Among them, that the user behavior data meets preset system switching condition may mean that the user behavior data meet a corresponding threshold condition. For example, when the user behavior data is a heart rate value, a preset system switching condition to be met is a heart rate threshold condition; when the user behavior data is an acceleration value, a preset system switching condition to be met is an acceleration threshold condition.

Specifically, when the user behavior data meets the preset system switching condition, the wearable device will turn off the first system, and switch the running system from the first system to the second system. For example, the user behavior data is the heart rate value; when the heart rate value is less than a heart rate value threshold, it means that the user's behavior at this time is sleeping, the user may not need to use the wearable device at this time, and the wearable device will switch the running system to the second system. Alternatively, the user behavior data is the acceleration value; when the acceleration value is greater than the acceleration threshold, it means that the user's activity at this time is relatively intense. For example, the user's behavior at this time may be running, and the user may not need to use a wearable device at this time. The wearable device switches the running system to the second system.

In this embodiment, when the user behavior data meets the preset system switching condition, the wearable device switches the system running on the wearable device to the second system in response to detecting that a system switching operation is approved. Specifically, when the user behavior data meets the preset system switching conditions, the wearable device displays "whether to agree to perform system switching" on a screen. When the wearable device detects an operation agreeing to system switching, it switches the running system to the second system.

In the method for controlling a wearable device in this embodiment, the start time of a schedule is acquired, and when the start time is reached, the user behavior data is acquired; the user behavior data is acquired only when the start time is reached, it is not required to keep acquiring the user behavior data, thereby saving power consumption; when the user behavior data meets the preset system switching condition, a system running on the wearable device is switched to the second system, wherein power consumption of the first system is higher than that of the second system, thus power consumption of the wearable device can be further lowered.

In one embodiment, the when the user behavior data meets a preset system switching condition, switching a system running on the wearable device to the second system includes: determining a schedule category according to the user behavior data; when the schedule category is a category meeting the system switching condition, switching the system running on the wearable device to the second system.

Among them, the schedule category may be a category of schedule scenes, for example, a sleep category, an exercise category, a conference category, an exam category, etc., and is not limited thereto. A category meeting the system switching condition may be a sleep category, an exercise category, a conference category, etc., but is not limited thereto. Categories meeting system switching conditions can be set as required.

Specifically, different user behavior data ranges may correspond to different schedule categories. Taking the user behavior data as the heart rate value as an example, a heart rate value range corresponding to a sleep category <a heart rate value range corresponding to a meeting category <a heart rate value range corresponding to an exercise category. Thus, the wearable device can determine the schedule category according to a range of the user behavior data. When the wearable device detects that the schedule category is a category that meets the system switching condition, the system running on the wearable device is switched to the second system.

The wearable device can determine whether the schedule category is an exercise category, a sleep category, or a conference category according to the heart rate value. The wearable device can determine whether the schedule category is an exercise category according to the acceleration value. The wearable device can determine whether the schedule category is an exercise category, a sleep category, or a conference category according to the acceleration value and the heart rate value.

In this embodiment, the schedule category is determined according to the user behavior data; when the schedule category is a category that meets the system switching condition, and it is detected that a system switching operation is approved, the system running on the wearable device is switched to the second system.

In the method for controlling a wearable device in this embodiment, the schedule category is determined according to the user behavior data, and when the schedule category is a category that meets the system switching condition, the system running on the wearable device is switched to the second system. It is possible to switch the system running on the wearable device to the second system in case of a certain schedule category.

In one embodiment, the method for controlling a wearable device further includes: acquiring a configured schedule category corresponding to the schedule. The when the user behavior data meets a preset system switching condition, switching a system running on the wearable device to the second system includes: when the user behavior data meets a system switching condition corresponding to the schedule category, switching a system running on the wearable device to the second system.

Among them, the configured schedule category refers to a schedule category configured on the first system. For example, the first schedule is set to be from 17:00 to 18:00, and the schedule category is running. The second schedule is set to be from 18:10 to 19:00, and the schedule category is dinner. Various schedule category has different system switching conditions. For example, system switching conditions of sleep categories are different from those of exercise categories.

Specifically, the wearable device acquires a configured schedule category corresponding to the schedule. When the user behavior data meets a system switching condition corresponding to the schedule category, the system running on the wearable device is switched to the second system. Taking the user behavior data as the heart rate value and the schedule category as the exercise category as an example, a system switching condition corresponding to the exercise category may be a heart rate value being greater than a preset heart rate threshold, and thus the system running the wearable device is switched to the second system.

The method for controlling a wearable device in this embodiment acquires a configured schedule category corresponding to a schedule, and when the user behavior data meets a system switching condition corresponding to the schedule category, switches the system running on the wearable device to the second system. Thus, various schedule categories have different system switching conditions, the system can be switched under different conditions, and power consumption of the wearable device is reduced.

In one embodiment, the method for controlling a wearable device further includes: acquiring a configured schedule category corresponding to the schedule. The when the user behavior data meets a preset system switching condition, switching a system running on the wearable device to the second system includes: when the schedule category is a category meeting a system switching condition, switching a system running on the wearable device to the second system.

In one embodiment, the when the user behavior data meets a preset system switching condition, switching a system running on the wearable device to the second system includes: when the user behavior data includes a heart rate value, and the heart rate value meets a heart rate threshold condition corresponding to a schedule category, switching the system running on the wearable device to the second system; when the user behavior data includes an acceleration value, and the acceleration value meets an acceleration threshold condition corresponding to a schedule category, switching the system running on the wearable device to the second system; and when the user behavior data includes a heart rate value and an acceleration value, the heart rate value meets a heart rate threshold condition corresponding to a schedule category and the acceleration value meets an acceleration threshold condition corresponding to the schedule category, switching the system running on the wearable device to the second system.

Specifically, the heart rate value can be acquired through measurement by a heart rate sensor. The heart rate threshold condition may be being less than a first heart rate threshold, being greater than a first heart rate threshold and less than a second heart rate threshold, being greater than the second heart rate threshold, etc., but not limited thereto, wherein the first heart rate threshold is less than the second heart rate threshold. For example, when the user behavior data includes a heart rate value, and the heart rate value meets a condition of being smaller than the first heart rate threshold, which corresponds to the sleep category, the system running on the wearable device can be switched to the second system. The first heart rate threshold and the second heart rate threshold are determined by a user's usual behavior statistics. For example, the wearable device can detect the user's heart rate in real time within a day. A measured heart rate of the user is 70-80 during 50% of the time, is 60-70 during 30% of the time, and is higher than 80 heart rate during 20% of the time. Thus, it is possible to set 70 as the first threshold, 80 as the second threshold, etc., but not limited here.

The acceleration value can be acquired by acceleration measurement. The acceleration values can be used to measure whether a user's behavior results in acceleration. For example, in a sleeping situation, or in a conference, etc., the acceleration value is almost zero or there is acceleration only for a short time. Thus, when the acceleration value meets an acceleration threshold condition corresponding to an operation category, the system running on the wearable device is switched to the second system.

When the user behavior data includes a heart rate value and an acceleration value, the heart rate value meets a heart rate threshold condition corresponding to a schedule category and the acceleration value meets an acceleration threshold condition corresponding to the schedule category, the wearable device switches the running system to the second system.

In the method for controlling a wearable device in this embodiment, when the user behavior data includes a heart rate value, and the heart rate value meets a heart rate threshold condition corresponding to a schedule category, the system running on the wearable device is switched to the second system; when the user behavior data includes an acceleration value, and the acceleration value meets an acceleration threshold condition corresponding to a schedule category, the system running on the wearable device is switched to the second system; and when the user behavior data includes a heart rate value and an acceleration value, the heart rate value meets a heart rate threshold condition corresponding to a schedule category and the acceleration value meets an acceleration threshold condition corresponding to the schedule category, the system running on the wearable device is switched to the second system. When at least one kind of user behavior data in the heart rate value and the acceleration value meets a corresponding system switching condition, the system running on the wearable device is switched to the second system, so as to switch to a system with lower power consumption when the user does not need to use the wearable device, and thereby reduce power consumption of the wearable device.

In one embodiment, the method for controlling the wearable device further includes: when the schedule category is an exercise category, determining that the user behavior data includes at least one of an acceleration value and a heart rate value.

Specifically, when the schedule category is the exercise category, the acceleration value and the heart rate value during exercise are larger than the acceleration value during work or study use. Therefore, when the schedule category is the exercise category, the wearable device can measure the acceleration value, the heart rate value, or both the acceleration and heart rate values. When the acceleration value meets an acceleration threshold condition corresponding to the exercise category, the system running on the wearable device is switched to the second system. When the heart rate value meets the heart rate threshold condition corresponding to the exercise category, the system running on the wearable device is switched to the second system. When the acceleration value meets the acceleration threshold condition corresponding to the exercise category, and the heart rate value meets the heart rate threshold condition corresponding to the exercise category, the system running on the wearable device is switched to the second system.

The method for controlling a wearable device in this embodiment determines that the user behavior data includes at least one of an acceleration value and a heart rate value when the schedule category is an exercise category. It is possible to switch to the second system when various kinds of user behavior data meet preset system switching conditions, and thereby reduce power consumption of the wearable device.

In one embodiment, a method for controlling a wearable device further includes: when the schedule category is a sleep category or a conference category, determining that the user behavior data includes a heart rate value, or includes both a heart rate value and an acceleration value.

Specifically, when the schedule category is a sleep category or a conference category, the user's heart rate is relatively gentle and small, and the acceleration value is almost zero or the acceleration value only exists for a short time. Therefore, when the schedule category is the sleep category or the conference category, the wearable device can acquire the heart rate value, or both the heart rate value and the acceleration value. Thus, when the heart rate value meets the heart rate threshold condition corresponding to the exercise category, the system running on the wearable device is switched to the second system. When the acceleration value meets the acceleration threshold condition corresponding to the exercise category, and the heart rate value meets the heart rate threshold condition corresponding to the exercise category, the system running on the wearable device is switched to the second system.

In the method for controlling a wearable device in this embodiment, when the schedule category is a sleep category or a conference category, it is determined that the user behavior data includes a heart rate value, or includes both a heart rate value and an acceleration value. It is possible to switch to the second system when various kinds of user behavior data meet preset system switching conditions, and thereby reduce power consumption of the wearable device.

In one embodiment, the acquiring user behavior data includes: acquiring a heart rate value and a credibility corresponding to the heart rate value. The when the user behavior data meets a preset system switching condition, switching a system running on the wearable device to the second system includes: when the credibility reaches a preset credibility threshold and the heart rate value meets a heart rate threshold condition, switching the system running on the wearable device to the second system.

Among them, a credibility corresponding to a heart rate value is used to represent a reliability degree of the heart rate value. The credibility threshold may be 60%, 70%, 80%, 90%, etc., but is not limited here. The wearable device can determine the credibility corresponding to the heart rate value according to a signal strength. The higher the signal strength, the higher the credibility; the lower the signal strength, the lower the credibility. Alternatively, the wearable device can determine the credibility according to similarity between a current heart rate curve and a human heart rate curve. The higher the similarity, the higher the credibility; the lower the similarity, the lower the credibility. This method can effectively prevent the wearable device from measuring other objects and generating a heart rate.

Specifically, the wearable device acquires a heart rate value of a user and a credibility corresponding to the heart rate value. When the credibility reaches a preset credibility threshold and the heart rate value meets a heart rate threshold condition, the wearable device switches the running system to the second system.

The method for controlling a wearable device in this embodiment acquires a heart rate value and a credibility corresponding to the heart rate value, and switches a system running on the wearable device to the second system when the credibility reaches a preset credibility threshold and the heart rate value meets a heart rate threshold condition. It is possible to avoid false switching caused when the wearable device is not on the user but on other objects such as paper towels, thereby improving accuracy of controlling the wearable device.

In one embodiment, the switching a system running on the wearable device to the second system includes: controlling a switch in the wearable device to switch from a path between a first processor corresponding to the first system and other elements to a path between the second processor corresponding to the second system and other elements.

Specifically, the other elements may specifically be elements other than the first processor and the second processor. At least one of the display screen, the control panel, the GPS module, the heart rate sensor......the debugging module, as shown in FIG. 1, can be referred to as other elements. The wearable device controls the switch in the wearable device to switch from the path between the first processor corresponding to the first system and other elements to the path between the second processor corresponding to the second system and other elements.

The method for controlling a wearable device in this embodiment controls the switch in the wearable device to switch from the path between the first processor corresponding to the first system and other elements to the path between the second processor corresponding to the second system and other elements. It is possible to implement system switching and switch the system to a system with lower power consumption, thereby reducing power consumption of the wearable device.

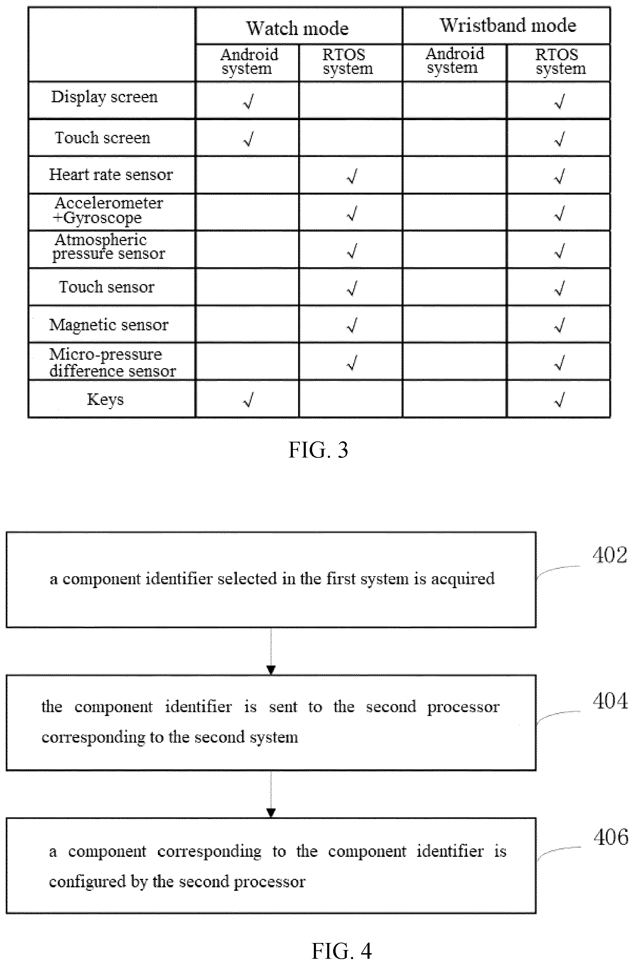

In one embodiment, as shown in FIG. 3, which is a schematic diagram of a function control system of a wearable device in one embodiment. That the first system is an Android system and the second system is an RTOS system are taken as an example for description. The wearable device includes at least two operation modes, taking a watch mode and a wristband mode as an example. Among them, the watch mode means that the wearable device runs both the Android system and the RTOS system, and the wristband mode means that the wearable device turns off the Android system and only runs the RTOS system. Sensors such as a heart rate sensor, an ECG sensor, a motion sensor, and so on, are all controlled by RTOS system in both the watch mode and the wristband mode. The display, touch screen and keys can be controlled by different systems in different modes, that is, in the watch mode, the display, touch screen and keys can be controlled by the Android system; and in the wristband mode, the display, touch screen and keys can be controlled by the RTOS system.

In one embodiment, as shown in FIG. 4, which is a schematic flow chart of component configuration in one embodiment, and includes the follows.

Operation 402, a component identifier selected in the first system is acquired.

Among them, the component identifier is used to uniquely identify different components. Each component has a corresponding component identifier. The component identifier can be composed of at least one of numbers, letters, characters, and symbols. The component identifiers may specifically include one or more of a motion recognition functional component identifier, a GPS (Global Positioning System) motion track functional component identifier, a dynamic heart rate monitoring functional component identifier, an ECG (Electrocardiogram) monitoring functional component identifier, and a personalized dynamic dial function component identifier, but are not limited here.

Specifically, the component identifier is a mapping of the component on the first system. That is, a component identifier displayed on the first system has no corresponding component configuration. The wearable device acquires the component identification configured in the first system. For example, a wearable device displays optional component identifiers on a screen and acquires a selected component identifier.

Operation 404, the component identifier is sent to the second processor corresponding to the second system.

Specifically, the wearable device sends the component identifier to the second processor corresponding to the second system through a serial peripheral interface.

Operation 406, a component corresponding to the component identifier is configured by the second processor.

Specifically, configuration information related to the component is located in the second processor corresponding to the second system. The wearable device configures the component corresponding to the component identifier by the second processor corresponding to the second system, and displays it, so as to realize the function corresponding to the component.

The method for controlling a wearable device in this embodiment acquires a component identifier selected in the first system, sends the component identifier to the second processor corresponding to the second system, and configures a component corresponding to the component identifier by the second processor corresponding to the second system. It is possible to realize functional component configuration at the same time of reducing power consumption, and thereby improve personalized experience.

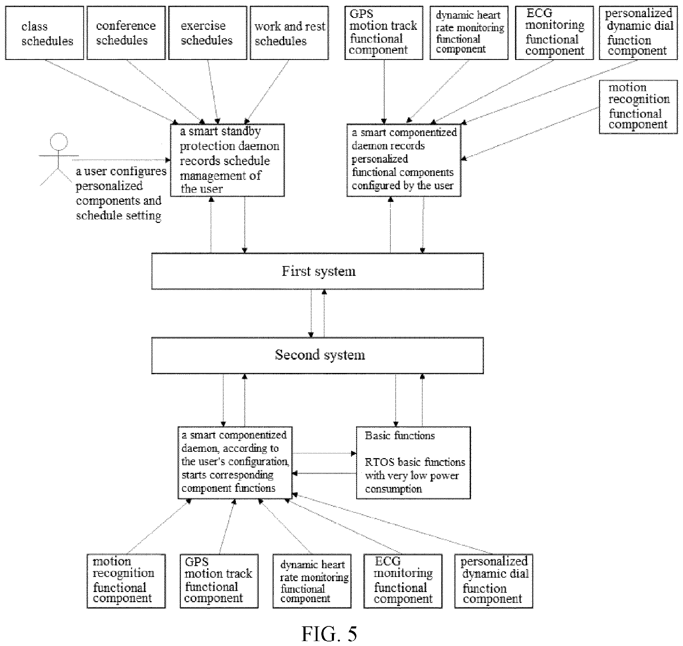

In one embodiment, as shown in FIG. 5, which is a schematic diagram of a componentized configured system in one embodiment. The wearable device can record a schedule management of a user through a smart standby daemon, such as one or more of class schedules, conference schedules, exercise schedules, and work and rest schedules. The wearable device can record personalized functional components configured by the user through intelligent componentization. Functional component identifiers of the first system include, but are not limited to, one or more of a motion recognition functional component identifier, a GPS (Global Positioning System) motion track functional component identifier, a dynamic heart rate monitoring functional component identifier, an ECG (Electrocardiogram) monitoring functional component identifier, and a personalized dynamic dial function component identifier. Basic functions of the second system can be power-saving components such as pedometer monitoring, heart rate measurement, time dial, message notification modules, and so on. The user can configure different components through the second system on the basis of the basic functions.

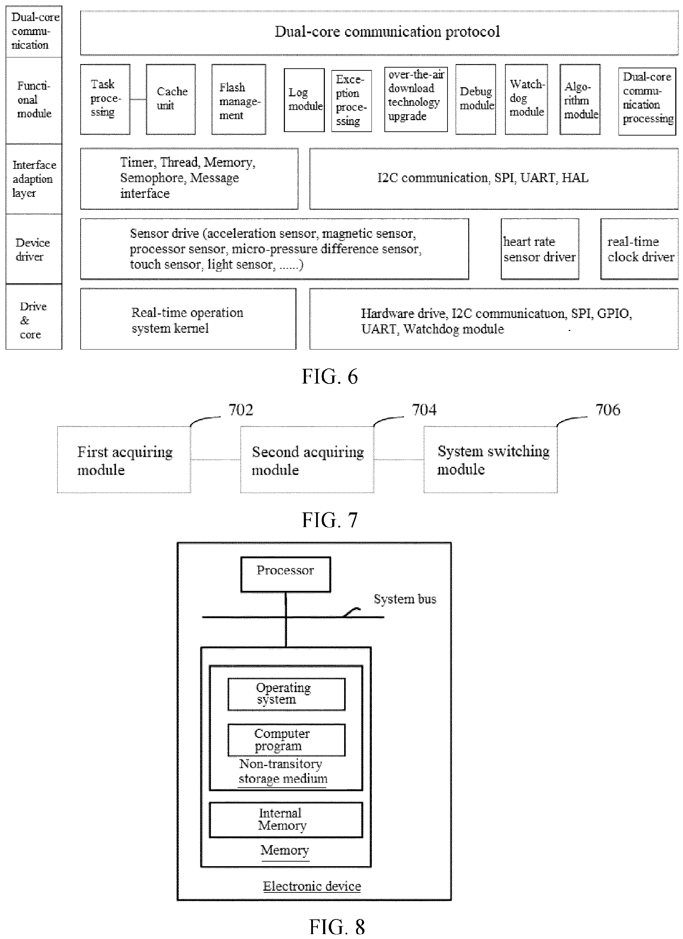

In one embodiment, as shown in FIG. 6, it is a schematic diagram of componentized configured modules in one embodiment. An RTOS system is an open-source real-time operating system, which only provides basic task scheduling functions and does not provide any business functions. Based on the basic functions of RTOS, the operating system is repackaged, and functional components for each business are provided. The modules include a dual-core communication layer, a functional module layer, an interface adaptation layer, a device driver layer, a core driver layer, etc. The functional modules include task processing, a cache unit, a Flash management module, a log module, an exception processing module, an over-the-air download technology upgrade module, a debug module, a watchdog module, an algorithm module and dual-core communication processing module. The interface adaptation layer includes a timer interface, a thread interface, a memory interface, a message interface, and so on. The device driver layer includes a sensor driver such as one or more of an acceleration sensor, a magnetic sensor, a pressure sensor, a micro-pressure difference sensor, a touch sensor, a light sensor, a heart rate sensor driver, and a real-time clock driver, but is not limited here.

In one embodiment, corresponding component identifiers within schedule start time and schedule end time configured in the first system are acquired; the component identifiers are sent to the second processor corresponding to the second system; components corresponding to the component identifiers are configured within the schedule start time and the schedule end time by the second processor corresponding to the second system. The method for controlling a wearable device in this embodiment can configure components in different schedule start time and schedule end time, so that more component functions can be realized when the second system is running, and personalized experience is improved.

In one embodiment, the method for controlling a wearable device further includes: acquiring end time of a schedule; when the end time is reached, switching a system running on the wearable device from the second system to the first system.

Specifically, the end time of the schedule refers to time of ending the schedule. A first schedule is set to be running from 17:00 to 18:00, then 18:00 is end time of the first schedule. A second schedule is set to be eating from 18:10 to 19:00, then 19:00 is end time of the second schedule. The wearable device acquires the end time of the schedule, and when the end time is reached, automatically switches the running system from the second system to the first system.

In this embodiment, the automatically switching the running system from the second system to the first system includes: controlling a switch in the wearable device to switch from a path between the second processor corresponding to the second system and other elements to a path between the first processor corresponding to the first system and other elements.

In this embodiment, when the end time is reached, and the wearable device detects that a system switching operation is approved, the system running on the wearable device is switched from the second system to the first system.

The method for controlling a wearable device in this embodiment acquires end time of a schedule, and switches the system running on the wearable device from the second system to the first system when the end time is reached. It is possible to switch systems without affecting normal operations of users.

In one embodiment, a user performs selection in the first system according to provided components, and a smart standby protection daemon will record and manage the schedule and functional component configuration of the user. When the start time of the schedule is reached, a prompt is given to the user, and an automatic recognition function for an exercise state is turned on. When it is determined that the user is running, the intelligent standby protection automatically switches to the second system, and performs function detection according to the component configuration of the user.

In this embodiment, the when the user behavior data meets a preset system switching condition, switching a system running on the wearable device to the second system includes: when the system running on the wearable device is the second system, and the preset system switching condition is met, still keeping the system running on the wearable device being the second system.

Specifically, when the system currently running on the wearable device is the second system, and the preset system switching condition is met, the wearable device does not switch the running system, that is, the system running on the wearable device is still kept being the second system.

In the method for controlling a wearable device in this embodiment, when the system running on the wearable device is the second system, and the preset system switching condition is met, the system running on the wearable device is still kept being the second system, such that the wearable device is still in a lowpower consumption state, power consumption of the wearable device is reduced, and the wearable device is enabled to be used for more time after being fully charged.

In one embodiment, a method for controlling a wearable system includes the follows.

Operation a1, when a system operating on a wearable device is a first system, the first system provides a window for a user to personalize s component.

Operation a2, schedule setting of the user is recorded and managed by the first system.

Operation a3, when a component configuration instruction is received in the first system, a component identifier selected in the first system is acquired.

Operation a4, when start time of a schedule is reached, a reminder is given, and an automatic motion state recognition function is turned on to detect user behavior, thereby acquiring user behavior data.

Operation a5, when the user behavior data meets a preset system switching condition, a system running on the wearable device is switched to the second system. The wearable device configures a component corresponding to a component identifier through the second system, and displays it.

The method for controlling a wearable device in this embodiment can switch to a system with low power consumption, reduce power consumption of the wearable device, and improve personalize experience of configuration.

It should be understood that although the respective operations in the flowcharts of FIGS. 2, 4 and 5 are shown in sequence as indicated by the arrows, these operations are not necessarily performed sequentially in the sequence indicated by the arrows. Unless otherwise clearly specified herein, the execution of these operations is not strictly limited in order, and these operations may be performed in other orders. Moreover, at least some of the operations in FIGS. 2, 4 and 5 may include multiple sub-operations or multiple stages. These sub-operations or stages are not necessarily executed and completed at the same time, but may be executed at different times. Execution orders of these sub-operations or stages are not necessarily sequential, but may be performed in turns or alternately with at least some of other operations, or sub-operations or stages of other operations.

FIG. 7 is a structural block diagram of an apparatus for controlling a wearable device in one embodiment. As shown in FIG. 7, an apparatus for controlling a wearable device is provided, the wearable device includes a first system and a second system, wherein power consumption of the first system is higher than that of the second system, and the apparatus for controlling a wearable device includes a first acquiring module 702, a second acquiring module 704, and a system switching module 706; among them, the first acquiring module 702 is configured to acquire start time of a schedule; the second acquiring module 704 is configured to acquire user behavior data in response to reaching the start time; and the system switching module 706 is configured to switching a system running on the wearable device to the second system in response to the user behavior data meeting a preset system switching condition.

In the apparatus for controlling a wearable device in this embodiment, the start time of a schedule is acquired, and when the start time is reached, the user behavior data is acquired; the user behavior data is acquired only when the start time is reached, it is not required to keep acquiring the user behavior data, thereby saving power consumption; when the user behavior data meets the preset system switching condition, a system running on the wearable device is switched to the second system, wherein power consumption of the first system is higher than that of the second system, thus power consumption of the wearable device can be further lowered.

In one embodiment, the second acquiring module 704 is configured to determine a schedule category according to the user behavior data. The system switching module 706 is configured to switch the system running on the wearable device to the second system when the schedule category is a category meeting the system switching condition.

In the apparatus for controlling a wearable device in this embodiment, the schedule category is determined according to the user behavior data, and when the schedule category is a category that meets the system switching condition, the system running on the wearable device is switched to the second system. It is possible to switch the system running on the wearable device to the second system in case of a certain schedule category.

In one embodiment, the first acquiring module 702 is configured to acquire a configured schedule category corresponding to the schedule. The system switching module 706 is configured to switch a system running on the wearable device to the second system when the user behavior data meets a system switching condition corresponding to the schedule category.

The apparatus for controlling a wearable device in this embodiment acquires a configured schedule category corresponding to a schedule, and when the user behavior data meets a system switching condition corresponding to the schedule category, switches the system running on the wearable device to the second system. Thus, various schedule categories have different system switching conditions, the system can be switched under different conditions, and power consumption of the wearable device is reduced.

In one embodiment, the system switching module 706 is configured to: when the user behavior data includes a heart rate value, and the heart rate value meets a heart rate threshold condition corresponding to a schedule category, switch the system running on the wearable device to the second system; when the user behavior data includes an acceleration value, and the acceleration value meets an acceleration threshold condition corresponding to a schedule category, switch the system running on the wearable device to the second system; and when the user behavior data includes a heart rate value and an acceleration value, the heart rate value meets a heart rate threshold condition corresponding to a schedule category and the acceleration value meets an acceleration threshold condition corresponding to the schedule category, switch the system running on the wearable device to the second system.

In the apparatus for controlling a wearable device in this embodiment, when the user behavior data includes a heart rate value, and the heart rate value meets a heart rate threshold condition corresponding to a schedule category, the system running on the wearable device is switched to the second system; when the user behavior data includes an acceleration value, and the acceleration value meets an acceleration threshold condition corresponding to a schedule category, the system running on the wearable device is switched to the second system; and when the user behavior data includes a heart rate value and an acceleration value, the heart rate value meets a heart rate threshold condition corresponding to a schedule category and the acceleration value meets an acceleration threshold condition corresponding to the schedule category, the system running on the wearable device is switched to the second system. When at least one kind of user behavior data in the heart rate value and the acceleration value meets a corresponding system switching condition, the system running on the wearable device is switched to the second system, so as to switch to a system with lower power consumption when the user does not need to use the wearable device, and thereby reduce power consumption of the wearable device.

In one embodiment, the second acquiring module 704 is configured to: when the schedule category is an exercise category, determine that the user behavior data includes at least one of an acceleration value and a heart rate value.

The apparatus for controlling a wearable device in this embodiment determines that the user behavior data includes at least one of an acceleration value and a heart rate value when the schedule category is an exercise category. It is possible to switch to the second system when various kinds of user behavior data meet preset system switching conditions, and thereby reduce power consumption of the wearable device.

In one embodiment, the second acquiring module 704 is configured to: when the schedule category is a sleep category or a conference category, it is determined that the user behavior data includes a heart rate value, or includes both a heart rate value and an acceleration value.

In the apparatus for controlling a wearable device in this embodiment, when the schedule category is a sleep category or a conference category, it is determined that the user behavior data includes a heart rate value, or includes both a heart rate value and an acceleration value. It is possible to switch to the second system when various kinds of user behavior data meet preset system switching conditions, and thereby reduce power consumption of the wearable device.

In one embodiment, the second acquiring module 704 is configured to acquire a heart rate value and a credibility corresponding to the heart rate value. The system switching module 706 is configured to: when the credibility reaches a preset credibility threshold and the heart rate value meets a heart rate threshold condition, switch the system running on the wearable device to the second system.

The apparatus for controlling a wearable device in this embodiment acquires a heart rate value and a credibility corresponding to the heart rate value, and switches a system running on the wearable device to the second system when the credibility reaches a preset credibility threshold and the heart rate value meets a heart rate threshold condition. It is possible to avoid false switching caused when the wearable device is not on the user but on other objects such as paper towels, thereby improving accuracy of controlling the wearable device.

In one embodiment, the system switching module 706 is configured to control a switch in the wearable device to switch from a path between a first processor corresponding to the first system and other elements to a path between the second processor corresponding to the second system and other elements.

The apparatus for controlling a wearable device in this embodiment controls the switch in the wearable device to switch from the path between the first processor corresponding to the first system and other elements to the path between the second processor corresponding to the second system and other elements. It is possible to implement system switching and switch the system to a system with lower power consumption, thereby reducing power consumption of the wearable device.

In one embodiment, the apparatus for controlling a wearable device further includes a component identifier selecting module, a sending module, and a configuration module. The component identifier selecting module is configured to acquire a component identifier selected in the first system, the sending module is configured to send the component identifier to the second processor corresponding to the second system, and the configuration module is configured to configure a component corresponding to the component identifier by the second processor corresponding to the second system.

The apparatus for controlling a wearable device in this embodiment acquires a component identifier selected in the first system, sends the component identifier to the second processor corresponding to the second system, and configures a component corresponding to the component identifier by the second processor corresponding to the second system. It is possible to realize functional component configuration at the same time of reducing power consumption, and thereby improve personalized experience.

In one embodiment, the apparatus for controlling a wearable device further includes a component identifier selecting module, a sending module, and a configuration module. The component identifier selecting module is configured to acquire corresponding component identifiers within schedule start time and schedule end time configured in the first system; the sending module is configured to send the component identifiers the second processor corresponding to the second system; and the configuration module is configured to configure components corresponding to the component identifiers within the schedule start time and the schedule end time by the second processor corresponding to the second system.

The apparatus for controlling a wearable device in this embodiment can configure components in different schedule start time and schedule end time, so that more component functions can be realized when the second system is running, and personalized experience is improved.

In one embodiment, the first acquiring module 702 is configured to acquire end time of a schedule. The system switching module 706 is further configured to switch a system running on the wearable device from the second system to the first system when the end time is reached.

The apparatus for controlling a wearable device in this embodiment acquires end time of a schedule, and switches a system running on the wearable device from the second system to the first system when the end time is reached, it is possible to switch systems without affecting normal operations of users.

In one embodiment, the system switching module 706 is configured to: when the system running on the wearable device is the second system, and the preset system switching condition is met, still keep the system running on the wearable device being the second system.

In the apparatus for controlling a wearable device in this embodiment, when the system running on the wearable device is the second system, and the preset system switching condition is met, the system running on the wearable device is still kept being the second system, such that the wearable device is still in a lowpower consumption state, power consumption of the wearable device is reduced, and the wearable device is enabled to be used for more time after being fully charged.

The division of each module in the above-mentioned apparatus for controlling a wearable device is only used for illustration. In other embodiments, the apparatus for controlling a wearable device can be divided into different modules as required, so as to complete all or some functions of the above-mentioned apparatus for controlling a wearable device.

For the specific limitation of the apparatus for controlling a wearable device, reference may be made to the limitation of the method for controlling a wearable device above, which will not be repeated here. Each module in the above-mentioned apparatus for controlling a wearable device may be implemented in whole or in part by software, hardware and combinations thereof. The above modules can be embedded in or independent of a processor in a computer device in the form of hardware, or stored in a memory in a computer device in the form of software, so that a processor can call and execute operations corresponding to the above modules.

FIG. 8 is an internal structural schematic diagram of an electronic device in one embodiment. As shown in FIG. 8, the electronic device includes a processor and a memory which are connected by a system bus. Among them, the processor is used to provide computing and control capabilities to support operation of the entire electronic device. The memory may include a non-volatile storage medium and an internal memory. The non-volatile storage medium stores an operating system and a computer program. The computer program can be executed by the processor to implement the method for controlling a wearable device provided by the above embodiments. The internal memory provides a high-speed cached execution environment for the operating system and the computer program in the non-volatile storage medium. The electronic device may be a mobile phone, a tablet computer, a personal digital assistant or a wearable device, and the like.

The implementation of each module in the apparatus for controlling a wearable device provided in embodiments of the present application may be in the form of a computer program. The computer program can be run on a terminal or a server. Program modules constituted by the computer program can be stored in a memory of the terminal or the server. When the computer program is executed by a processor, operations of the methods described in embodiments of the present application are implemented.

An embodiment of the present application further provides a computer-readable storage medium, which is a non-transitory computer-readable storage medium including one or more computer-executable instruction. When the computer-executable instruction is executed by one or more processor, the processor is enabled to execute operations of a method for controlling a wearable device.

A computer program product including instructions is provided. When it runs on a computer, the computer is enabled to execute a method for controlling a wearable device.

Any reference to a memory, storage, database, or other medium as used herein may include non-volatile and/or volatile memories. The non-volatile memories may include a read only memory (ROM), a programmable ROM (PROM), an electrically programmable ROM (EPROM), an electrically erasable programmable ROM (EEPROM), or a flash memory. The volatile memory may include a random access memory (RAM), which acts as external high-speed cache memory. By way of illustration and not limitation, the RAM is available in various forms such as a static RAM (SRAM), a dynamic RAM (DRAM), synchronous DRAM (SDRAM), a double data rate SDRAM (DDR SDRAM), an enhanced SDRAM (ESDRAM), a synchronous Link (Synchlink) DRAM (SLDRAM), a Memory Bus (Rambus), a Direct RAM (RDRAM), a Direct Memory Bus Dynamic RAM (DRDRAM), and a Memory Bus Dynamic RAM (RDRAM).

The above-described embodiments only express several embodiments of the present application, its description is specific and detailed, but cannot be accordingly interpreted as any limitation to the patent scope of the present application. It should be noted that, for those skilled in the art, several modifications and improvements can be made without departing from the concept of the present application, they all belong to the protection scope of the present application. Therefore, the patent protection scope of the present application shall be subject to the appended claims.

## Claims

1. A method for controlling a wearable device, wherein the wearable device comprises a first system and a second system, power consumption of the first system is higher than that of the second system, and the method comprises:
acquiring start time of a schedule;
acquiring user behavior data in response to reaching the start time; and
switching a system running on the wearable device to the second system in response to the user behavior data meeting a preset system switching condition.

2. The method according to claim 1, wherein the switching a system running on the wearable device to the second system in response to the user behavior data meeting a preset system switching condition comprises:
determining a schedule category according to the user behavior data; and
switching the system running on the wearable device to the second system in response to the schedule category is a category meeting the system switching condition.

3. The method according to claim 1, further comprising:
acquiring a configured schedule category corresponding to the schedule;
wherein the switching a system running on the wearable device to the second system in response to the user behavior data meeting a preset system switching condition comprises:
switching a system running on the wearable device to the second system in response to the user behavior data meets a system switching condition corresponding to the schedule category.

4. The method according to claim 3, wherein the switching a system running on the wearable device to the second system in response to the user behavior data meets a system switching condition corresponding to the schedule category comprises:
switching the system running on the wearable device to the second system in response to the user behavior data comprising a heart rate value and the heart rate value meeting a heart rate threshold condition corresponding to a schedule category;
switching the system running on the wearable device to the second system in response to the user behavior data comprising an acceleration value and the acceleration value meeting an acceleration threshold condition corresponding to a schedule category; and
switching the system running on the wearable device to the second system in response to the user behavior data comprising a heart rate value and an acceleration value, the heart rate value meeting a heart rate threshold condition corresponding to a schedule category, and the acceleration value meeting an acceleration threshold condition corresponding to the schedule category.

5. The method according to claim 4, further comprising:
determining that the user behavior data comprises at least one of an acceleration value and a heart rate value in response to the schedule category being an exercise category.

6. The method according to claim 4, further comprising:
determining that the user behavior data comprises a heart rate value, or comprises both a heart rate value and an acceleration value in response to the schedule category being a sleep category or a conference category.

7. The method according to claim 1, wherein the acquiring user behavior data comprises:
acquiring a heart rate value and a credibility corresponding to the heart rate value;
wherein the switching a system running on the wearable device to the second system in response to the user behavior data meeting a preset system switching condition comprises:
switching the system running on the wearable device to the second system in response to the credibility reaching a preset credibility threshold and the heart rate value meeting a heart rate threshold condition.

8. The method according to any one of claims 1-7, wherein the switching the system running on the wearable device to the second system comprises:
controlling a switch in the wearable device to switch from a path between a first processor corresponding to the first system and other elements to a path between the second processor corresponding to the second system and other elements.

9. The method according to any one of claims 1-7, further comprising:
acquiring a component identifier selected in the first system;
sending the component identifier to a second processor corresponding to the second system; and
configuring a component corresponding to the component identifier by the second processor.

10. The method according to claim 1, further comprising:
acquiring end time of the schedule; and
switching the system running on the wearable device from the second system to the first system in response to reaching the end time.

11. The method according to claim 1, wherein the switching a system running on the wearable device to the second system in response to the user behavior data meeting a preset system switching condition comprises:
still keeping the system running on the wearable device being the second system in response to the system running on the wearable device being the second system and the preset system switching condition being met.

12. An apparatus for controlling a wearable device, wherein the wearable device comprises a first system and a second system, power consumption of the first system is higher than that of the second system, and the apparatus comprises:
a first acquiring module configured to acquire start time of a schedule;
a second acquiring module configured to acquire user behavior data in response to reaching the start time; and
a system switching module configured to switching a system running on the wearable device to the second system in response to the user behavior data meeting a preset system switching condition.

13. The apparatus according to claim 12, wherein the second acquiring module is configured to determine a schedule category according to the user behavior data; and
the system switching module is configured to switch the system running on the wearable device to the second system in response to the schedule category being a category meeting the system switching condition.

14. The apparatus according to claim 12, wherein the first acquiring module is configured to acquire a configured schedule category corresponding to the schedule; and
the system switching module is configured to switch a system running on the wearable device to the second system in response to the user behavior data meeting a system switching condition corresponding to the schedule category.

15. The apparatus according to claim 14, wherein the system switching module is further configured to switch the system running on the wearable device to the second system in response to the user behavior data comprising a heart rate value and the heart rate value meeting a heart rate threshold condition corresponding to a schedule category;
the system switching module is further configured to switch the system running on the wearable device to the second system in response to the user behavior data comprising an acceleration value and the acceleration value meeting an acceleration threshold condition corresponding to a schedule category; and
the system switching module is further configured to switch the system running on the wearable device to the second system in response to the user behavior data comprising a heart rate value and an acceleration value, the heart rate value meeting a heart rate threshold condition corresponding to a schedule category and the acceleration value meeting an acceleration threshold condition corresponding to the schedule category.

16. The apparatus according to claim 15, wherein the second acquiring module is configured to determine that the user behavior data comprises at least one of an acceleration value and a heart rate value in response to the schedule category being an exercise category.

17. The apparatus according to claim 15, wherein the second acquiring module is configured to determine that the user behavior data comprises a heart rate value, or comprises both a heart rate value and an acceleration value in response to the schedule category being a sleep category or a conference category.

18. The apparatus according to claim 12, wherein the second acquiring module is configured to acquire a heart rate value and a credibility corresponding to the heart rate value; and
the system switching module is configured to switch the system running on the wearable device to the second system in response to the credibility reaching a preset credibility threshold and the heart rate value meeting a heart rate threshold condition.

19. An electronic device comprising a memory and a processor, wherein the memory stores a computer program, and the computer program, when being executed by the processor, makes the processor execute operations of the method according to any one of claims 1-11.

20. A computer-readable storage medium storing a computer program, wherein the computer program, when being executed by a processor, implements operations of the method according to any one of claims 1-11.
